# EUROPEAN PATENT SPECIFICATION

(11) **EP 4 303 167 B1**
(45) Date of publication and mention of the grant of the patent: **19.11.2025**
(21) Application number: 22306000.5
(22) Date of filing: 05.07.2022
(51) Int. Cl.: B66C 13/06, B66C 13/08, B66C 13/46, B66C 17/00

(54) **METHOD TO OPTIMIZE AN ANTI-SWAY FUNCTION**
VERFAHREN ZUM OPTIMIEREN EINER ANTI-PENDELFUNKTION
PROCÉDÉ D'OPTIMISATION D'UNE FONCTION ANTI-BALANCEMENT

(43) Date of publication of application: 10.01.2024
(73) Proprietor: Schneider Electric Industries SAS, 92500 Rueil-Malmaison (FR)
(72) Inventor: Blondel, Charles, 38210 Cras (FR); CARVALHO, Jean-François, 27930 Miserey (FR)
(74) Representative: Schneider Electric

(56) References cited:
- US-A1- 2016 362 280
- US-B2- 9 108 826
- HIROKI SANO ET AL: "Anti-sway crane control based on dual state observer with sensor-delay correction", ADVANCED MOTION CONTROL, 2010 11TH IEEE INTERNATIONAL WORKSHOP ON, IEEE, PISCATAWAY, NJ, USA, 21 March 2010 (2010-03-21), pages 679 - 684, XP031676028, ISBN: 978-1-4244-6668-9
- CASTILLO ET AL: "Intelligent adaptive model-based control of robotic dynamic systems with a hybrid fuzzy-neural approach", APPLIED SOFT COMPUTING, ELSEVIER, AMSTERDAM, NL, vol. 3, no. 4, 1 December 2003 (2003-12-01), pages 363 - 378, XP022034401, ISSN: 1568-4946, DOI: 10.1016/J.ASOC.2003.05.007

## Description

### FIELD OF INVENTION

The present invention generally relates to a method for an anti-sway function applied to a hoisting appliance that is spanning a warehouse, the hoisting appliance being arranged for carrying a load suspended by cables from a trolley that can move with the hoisting appliance.

### BACKGROUND

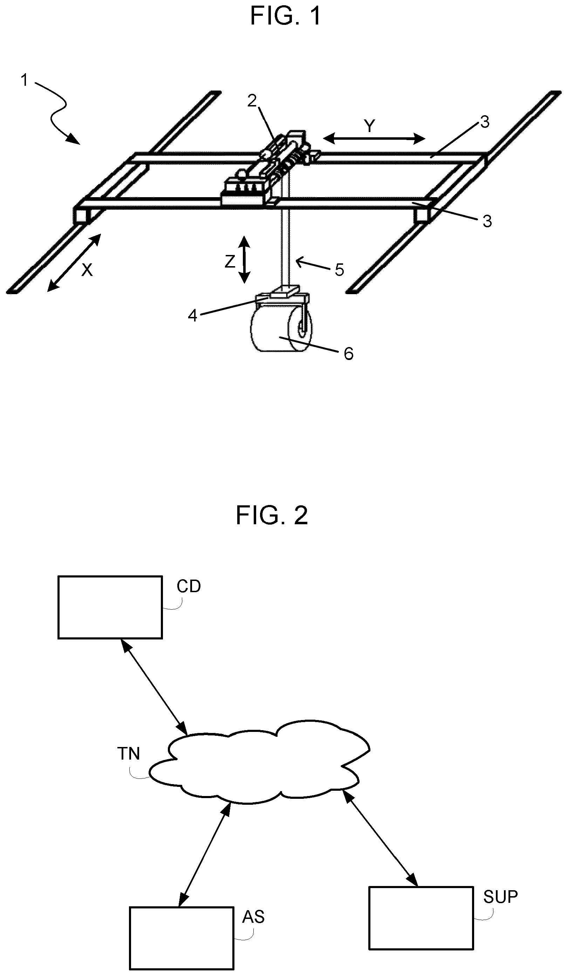

Hoisting appliances 1 such as bridge cranes, gantry cranes or overhead travelling cranes usually comprise a trolley 2 which can move over a single girder or a set of rails 3 along a horizontal axis Y, as shown in FIG. 1. This first movement along the Y-axis is generally referred to as short travel movement and/or trolley movement. Depending on the type of appliance, the girder or the set of rails 3, also referred to as bridge, may also be movable along a horizontal axis X perpendicular to the Y-axis, thus enabling the trolley to be moved along both the X- and Y-axes. This second movement along the X-axis is generally referred to as long travel movement and/or bridge, crane or gantry movement. The amount of available short travel along the Y-axis and long travel along the X-axis determines a hoisting area that is spanned by the hoist 1.

A tool 4, also called load suspension device, is associated with a reeving system having cables which pass through the trolley 2, the length of the cables 5 being controlled by the trolley 2 to vary, thereby enabling displacement of a load 6 along a vertical axis Z, referred to as hoisting movement.

Transferring a suspended load across a warehouse, a hall, shipyard, metallurgic or nuclear plant, requires an operator to be very careful to prevent people, obstacles or objects that are present within the hoisting area from being hit or damaged in any way. Hence, in addition to size, swinging of the suspended load, commonly referred to as sway, is something that the operator needs to take in account when manoeuvring the load across the working place along a trajectory within the boundaries of the hoisting area.

This complexity is what has hampered development of fully automated hoisting systems being capable of transferring suspended loads independently along a trajectory. Some advanced antisway functions are difficult and time consuming to put in place, which is mainly due to the large number of parameters that are variable and specific for each crane.

Several solutions already exist to resolve sway issues and can be chosen depending on expected accuracy, environment conditions (rain, snow, dust, etc.), or targeted performance.

On heavy industry factories, overhead cranes are necessary to handle heavy loads. For economical and efficiencies reasons such companies implement antisway system on their overhead crane to facilitate handling operation, to increase the quality of their finish products and to reduce mechanical constraint on crane avoiding premature wear of mechanical parts.

A method for optimizing a model used in real time by an antisway function, according to the preamble of claims 1 and 7, is disclosed in the paper published by Hiroki Sano et al., titled "Anti-sway crane control based on dual state observer with sensor-delay correction."

In order to implement an antisway system providing high accuracy, high performance and able to work in a severe environment, a first solution is to use a close loop with sensors offering better accuracy and performance, and a second solution is to use an open loop without sensors allowing harsh environment.

However for the first solution, there is no sensor able to operate under high temperature (over 100°C ambient temperatures) in steel making plants for example. Also most of the sensors are based on optical technologies (laser / infra red) and they are therefore sensitive to dust, snow, heavy rain, flying object such as plastic bags in waste industries. Besides, installation of sensor is sometime not possible because there is no energy available on the location or no available location to allow operation without any damage of the sensor.

For the second solution, accuracy and performance issues of an open loop system are mainly resulting from the impossibility to model external behaviors, such as:
- Sway at the ignition of the movement
- Sway generated by the Wind on outdoor crane
- Sway resulting of mechanical behavior (rolling)
- Sway generating by the load geometry during the movement (mass distribution)
- Sway generated during taking off the load
- Sway generated by the handling tool

All these behaviors generates a desynchronization of the model compared to the reality : it could be a periodical de-synchronism or it can be due to over or under estimation of the angle amplitude.

Accordingly, there is a need for implementing an antisway system providing high accuracy, high performance and able to work in a severe environment.

### SUMMARY

This summary is provided to introduce concepts related to the present inventive subject matter. This summary is not intended to identify essential features of the claimed subject matter nor is it intended for use in determining or limiting the scope of the claimed subject matter.

The present application provides a method for optimizing a model used in real time by an antisway function for the transport of a load by a hoisting appliance spanning a hoisting area and comprising a gantry and a trolley able to transport the load suspended to a hoist mechanism hosted in the trolley, according to claims 1 and 7 respectively.

Advantageously there is provided a new architecture of antisway control combining sensor measurements with a model normally used in open loop architecture, able to work in a severe environment, even with not accurate angle measurements. The antisway control can use a simulated signal having the value of the primary sway and being clean of any other unwanted information (secondary sway, vibration, etc.).

Sway model could provide during a short time a very clean and useful image of the sway. But after a long time, the model calculation could be false (amplitude or shift) due to parameters imprecision, for example related to severe environment. Thanks to measurement signal (after filtering), it is possible to resynchronize this model in real-time.

Advantageously, the method can be implemented for a particular architecture of the anti-sway function in an automated system. A particularity is to center the function around a digital swing model, and to base the regulation on this digital swing.

Indeed, the mathematical model can be synchronized using information already available that can be only remarkable points. Indeed, a mathematics model could be resynchronized with only one remarkable point, like a zero angle or a maximum angle.

In an embodiment, the model is synchronized based on the first calculated difference, by applying a time correction corresponding to the first calculated difference.

In an embodiment, the model is synchronized based on the second calculated difference, by applying an amplitude correction corresponding to the second calculated difference.

In an embodiment, the first filter and the second filter are low pass filters of first order.

In an embodiment, the first filter is set with a delay slightly above the period of a secondary sway of the load.

In an embodiment, the second filter is set with a delay less than the period of a secondary sway of the load.

In an embodiment, the first filter and the second filter are dynamic filters.

In an embodiment, the first filter and the second filter are set dynamically with a delay depending on the secondary sway of the load.

In another implementation, there is provided an apparatus for optimizing a model used in real time by an antisway function for the transport of a load by a hoisting appliance spanning a hoisting area and comprising a gantry and a trolley able to transport the load suspended to a hoist mechanism hosted in the trolley, wherein, when transported, the load presents a primary sway, the model comprising a model curve representing the theorical primary sway of the load over time, the apparatus comprising:
one or more network interfaces to communicate with a telecommunication network;
a processor coupled to the network interfaces and configured to execute one or more processes; and
a memory configured to store a process executable by the processor, the process when executed operable to:
   retrieving measurements of angles of the load with respect to the trolley to produce a measurement curve representing a primary sway of the load,
   applying a first filter to the measurement curve to obtain a first filtered measurement curve,
   calculating a first difference of time between the model curve and the first filtered measurement curve,
   applying a second filter to the first measurement curve to obtain a second filtered measurement curve,
   calculating a second difference of a maximum angle amplitude between the model curve and the second filtered measurement curve,
   synchronizing the model based on the first calculated difference or the second calculated difference.

In another implementation there is provided a computer-readable medium having embodied thereon a computer program for executing a method for optimizing a model used in real time by an antisway function for the transport of a load by a hoisting appliance. Said computer program comprises instructions which carry out steps according to the method according to the invention.

### BRIEF DESCRIPTION OF THE FIGURES

The detailed description is described with reference to the accompanying figures. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:
FIG. 1 shows schematically an example of a hoisting appliance;
FIG. 2 shows schematically an example of a communication system for optimizing an anti-sway algorithm for the transport of a load by a hoisting appliance;
FIG. 3 illustrates a representation of a primary sway over time;
FIG. 4a illustrates a representation of a measurement curve of the primary sway, a model curve of the primary sway and a first filtered measurement curve ;
FIG. 4b illustrates a representation of a first filtered measurement curve added to the measurement curve of the primary sway with the model curve of the primary sway for synchronization of the model curve;
FIG. 5a illustrates another representation of a measurement curve of the primary sway, a model curve of the primary sway and a second filtered measurement curve;
FIG. 5b illustrates another representation of a second filtered measurement curve added to the measurement curve of the primary sway with the model curve of the primary sway for synchronization of the model curve;
FIG. 6 illustrates a flow chart illustrating a method for optimizing a model used by an antisway function for the transport of a load by a hoisting appliance according to one embodiment;

The same reference number represents the same element or the same type of element on all drawings.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

### DESCRIPTION OF EMBODIMENTS

The figures and the following description illustrate specific exemplary embodiments of the invention. It will thus be appreciated that those skilled in the art will be able to devise various arrangements that, although not explicitly described or shown herein, embody the principles of the invention and are included within the scope of the invention. Furthermore, any examples described herein are intended to aid in understanding the principles of the invention, and are to be construed as being without limitation to such specifically recited examples and conditions. As a result, the invention is not limited to the specific embodiments or examples described below, but by the claims and their equivalents.

Referring to FIG. 2, a communication system for optimizing an antisway function for the transport of a load by a hoisting appliance comprises a control device CD, an angle sensor AS and a supervisory system SUP.

A hoisting area, such as a warehouse, a yard, a hall, or other working area, is provided with a supervisory system SUP that is an IT control system for supervision of the hoisting area. The supervisory system provides information to the control device CD for trajectory execution, authorization i.e. access management, and security in general.

The control device CD is able to communicate with the supervisory system SUP and with the angle sensor AS through a telecommunication network TN. The telecommunication network may be a wired or wireless network, or a combination of wired and wireless networks. The telecommunication network can be associated with a packet network, for example, an IP ("Internet Protocol") high-speed network such as the Internet or an intranet, or even a company-specific private network. The control device CD may be Programmable Logic Controllers (PLC) and other automation device able to implement industrial processes and able to communicate with the supervisory system for exchanging data such as requests, inputs, control data, etc.

The angle sensor AS may be linked to the trolley and is configured to measure the angle of the load with respect to the trolley, i.e. the angle between the load and the vertical axis. The angle sensor AS reports the measured angles to the control device CD.

The control device CD is configured to create a path to be followed by the crane for transporting a load from one place within the hoisting area to another. Usually, an anti-sway algorithm is used for the damping of sways of a load during the operation of the bridge crane, which provides the increase of a mechanism performance, reduces the risk of accidents and traumatic situations. Methods that are used to achieve this goal may include mathematical model and computer simulation.

Some anti-sway systems in close loop can be based on the use of a load angle sensor. For example, an anti-sway algorithm takes as inputs dynamic parameters of hoisting appliance comprising the current position of the trolley and the current angle of the load with respect to the trolley. For an anti-sway system in open loop, the anti-sway algorithm is based on a mathematical model and does not use data coming from sensors, such as an angle sensor. In one embodiment, the anti-sway algorithm uses data coming from the angle sensor AS in order to adjust the mathematical model, that can be desynchronized with reality, for example in time or in amplitude.

The control device CD is configured to determine remarkable points that can be used for optimizing an antisway function, by resynchronizing the mathematical model with at least one of the determined remarkable points. To that end, the control device uses filters applied to the angles measured by the angle sensor to calculate a deviation from the mathematical model and the filtered measurements at remarkable points of the mathematical model.

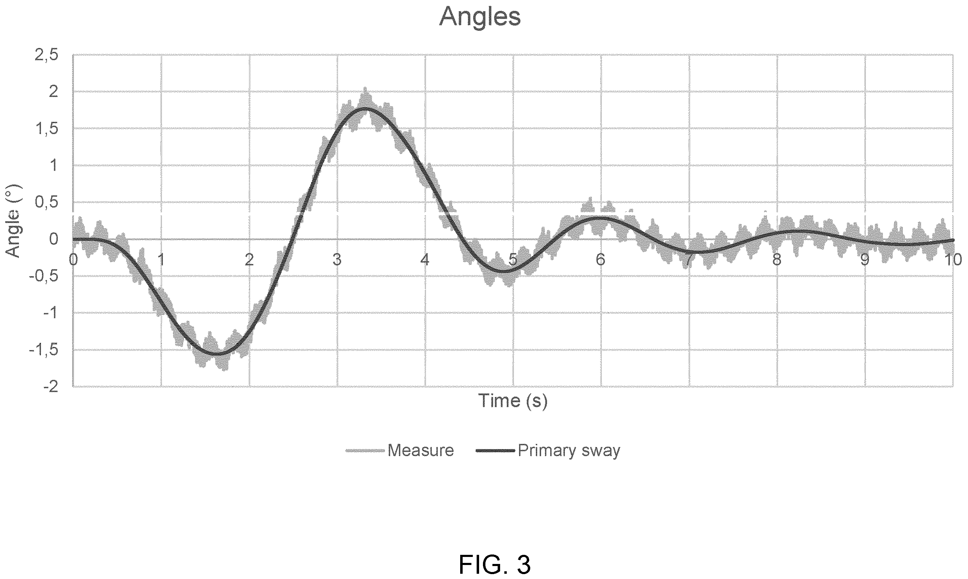

Referring to FIG. 3, it is represented a primary sway of the suspended load along the axis the suspended load is moving on. During the transport of the load, the control device is using in real time the mathematical model to follow the theorical sways of the load during time. When the trolley is travelling, the suspended load presents an angle with respect to axis X or axis Y, corresponding to the primary sway. The mathematical model gives the amplitude of the sway with respect to time. The angle sensor gives the amplitude of the sway measurement with respect to time. The sway measurement corresponds to a raw value of a perturbated sway measurement.

The raw value of a perturbated sway measurement shows variations that may be due to at least a secondary sway (medium frequency) and perturbation caused by mechanical vibration (high frequency). When the model is synchronized with the reality, the curve of the sway measurement is superimposed on the curve of the model. When it is generated a desynchronization of the model comparing with the reality, there could be a periodical de-synchronism or an over estimation or under estimation of the angle amplitude.

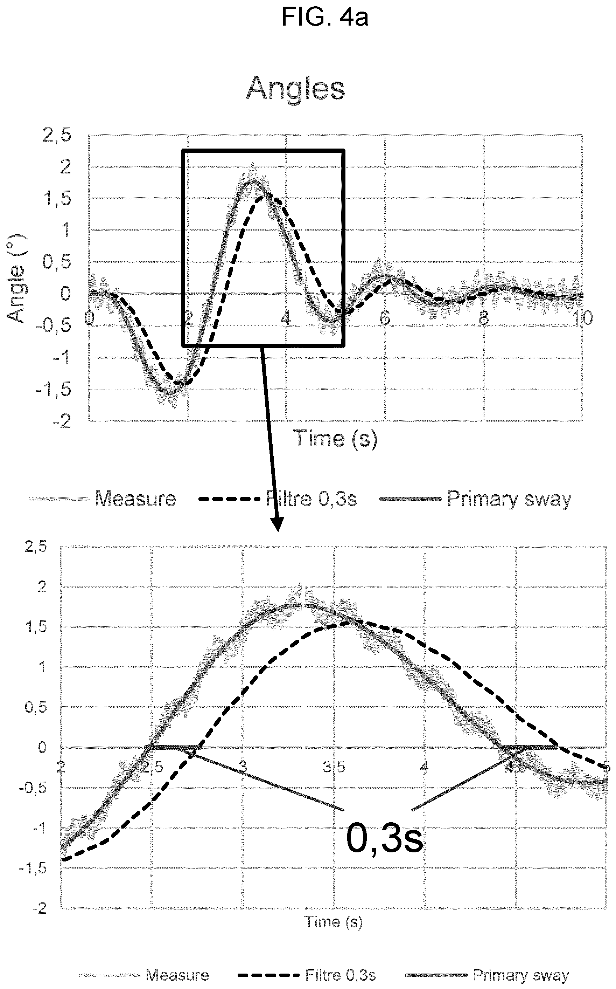

Referring to FIG. 4a, it is represented a measurement curve obtained from the measurement of the primary sway (angle) of the suspended load given by the angle sensor and a model curve of the mathematical model of the primary sway. After the measurement, it is applied a period filter which implies a time delay (0,3 second in this example).

The period filter is a low pass filter set to remove the variations due to the secondary sway. The secondary sway phenomena may occur when the reeving system distance is small, corresponding more or less to the length of the cable between the trolley and the tool. A secondary sway phenomena may depend also on the global equivalent center of gravity.

The difference between the primary sway and the secondary sway is quickly explained hereinafter. In case of primary sway, the load may balance in an arc below the trolley from the vertical axe, in a direction parallel to the trolley travel direction. The rotation axis is situated around the upper part of the reeving system linked to the trolley. In case of secondary sway, the tool may further balance in an arc below the trolley from the axe of the global equivalent center of gravity, in a direction parallel to the trolley travel direction. The rotation axis is situated between the lower part of the reeving system linked to the tool and the center of gravity of the load.

The configuration of the period filter depends on the period of the secondary sway. As the secondary sway may vary and depends on the length of the cable, the configuration of the period filter can be dynamic and depends on the current length of the cable.

In one embodiment, the periodic filter is set with a delay slightly above the period of the secondary sway. In one example, the period of the secondary sway is 0,25s and the delay of the periodic filter is set to 0,3s. Such configuration allows a time offset that is accurate despite a loss of accuracy in amplitude for the curve of the filtered measurement.

The graphic below represents a zoom in the aera delimited by a rectangle. The periodic filter provides a time delay of 0,3 second that can be clearly seen when the angle of the primary sway equals to zero.

It can then be calculated the difference between the filtered measurement and the mathematical model at a remarkable point as a zero angle (the sway is null) for example. As the expected delay is known, if the calculated difference is different from the expected delay, the mathematical model can be shifted based on the calculated difference. In this example, the curve of the measurement of the primary sway follows the curve of the mathematical model which is thus considered synchronized.

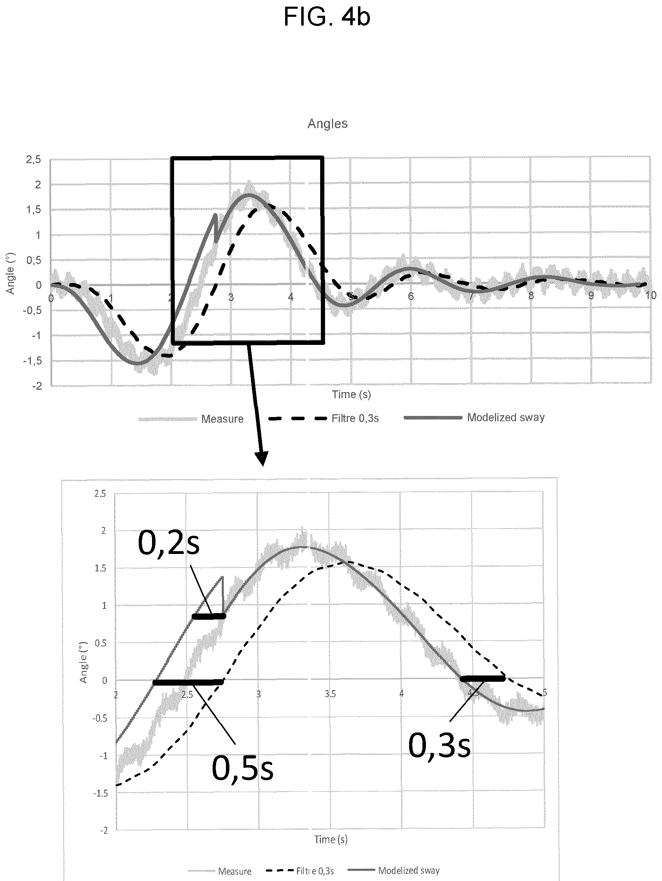

Referring to FIG. 4b, it is represented the measurement curve of the primary sway of the suspended load, the model curve of the mathematical model of the primary sway and the filtered curve of the filtered measurement with an adapted filter. The measurement curve does not follow the model curve (modelized sway) of the mathematical model which is thus considered desynchronized.

The graphic below represents a zoom in the aera delimited by a rectangle. Because the normal value should be 0,3 second, it means that the mathematical model is in advance of the difference, i.e. 0,2 second. The mathematical model can be then resynchronized by shifting in time this latter by a value of 0,2 second. The synchronization can be done for example once the angle of the filtered measurement equals to zero, allowing to calculate the difference between the filtered measurement and the mathematical model.

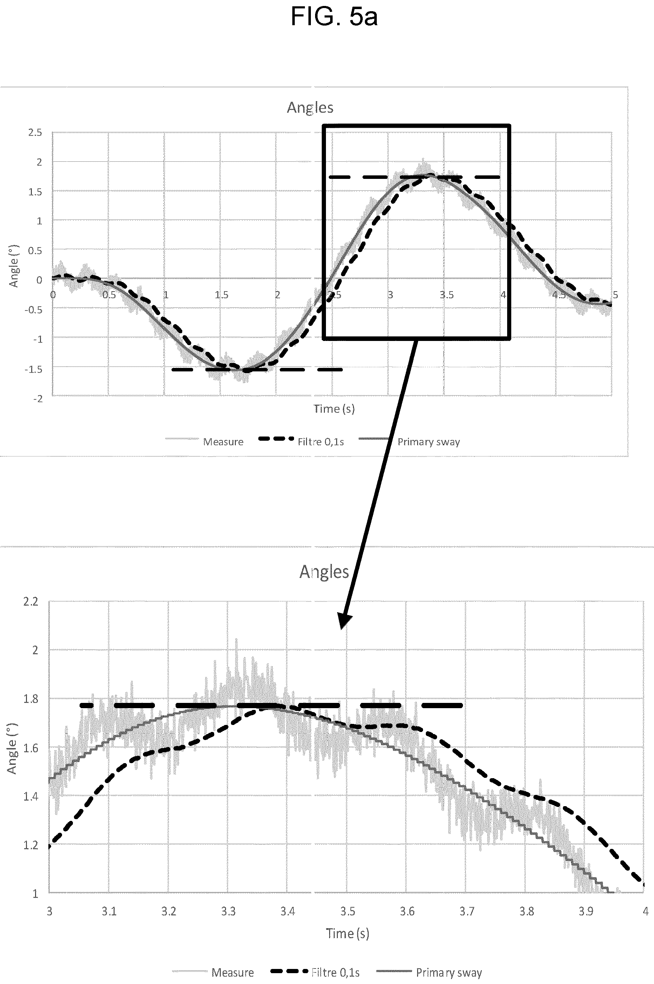

Referring to FIG. 5a, it is represented the measurement curve of the measurement of the primary sway (angle) of the suspended load given by the angle sensor and the model curve of the mathematical model of the primary sway. After the measurement, it is applied an amplitude filter which implies a time delay (0,1 second in this example).

The amplitude filter is a low pass filter set to remove partly the variations due to du to "perturbation caused by mechanical vibration (high frequency)".

The configuration of the amplitude filter depends on the period of the secondary sway. As the secondary sway may vary and depends on the length of the cable, the configuration of the amplitude filter can be dynamic and depends on the current length of the cable.

In one embodiment, the amplitude filter is set with a delay included in the period of the secondary sway. In one embodiment, the amplitude filter is set with a delay included between a quarter and a half of the period of the secondary sway. In one example, the period of the secondary sway is 0,25s and the delay of the amplitude filter is set to 0,1s. Such configuration allows an amplitude offset that is accurate despite remaining of variations of the measurement curve.

The graphic below represents a zoom in the area delimited by a rectangle. The amplitude filter provides a time delay of 0,1 second that can be clearly seen when the angle of the primary sway is maximum (almost 1,8°).

If the maximum value of the mathematical model is different from the value of the filtered measurement, the model is desynchronized and needs an amplitude correction.

It can then be calculated the difference between the filtered measurement and the mathematical model at a remarkable point as a maximum angle (the sway is maximum) for example. If the calculated difference is not null, the mathematical model can be shifted based on the calculated difference. In this example, the curve of the measurement of the primary sway follows in amplitude the curve of the mathematical model which is thus considered synchronized.

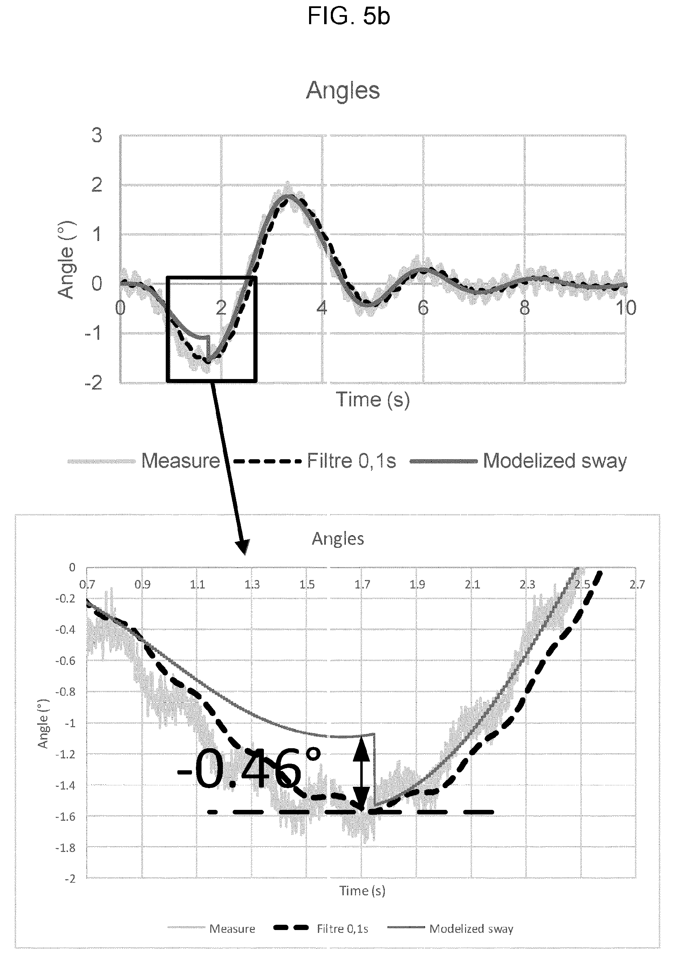

Referring to FIG. 5b, it is represented the measurement curve of the measurement of the primary sway of the suspended load, the model curve of the mathematical model of the primary sway and the filtered curve of the filtered measurement with an adapted filter. The measurement curve does not follow in amplitude the model curve of the mathematical model which is thus considered desynchronized.

The graphic below represents a zoom in the aera delimited by a rectangle. The value of the filtered measurement for an amplitude angle and the value of an amplitude angle of the mathematical model present a difference of "-0.46°". Just after the calculation of this difference (shown by a double arrow), the mathematical model is corrected in amplitude by applying the calculated difference.

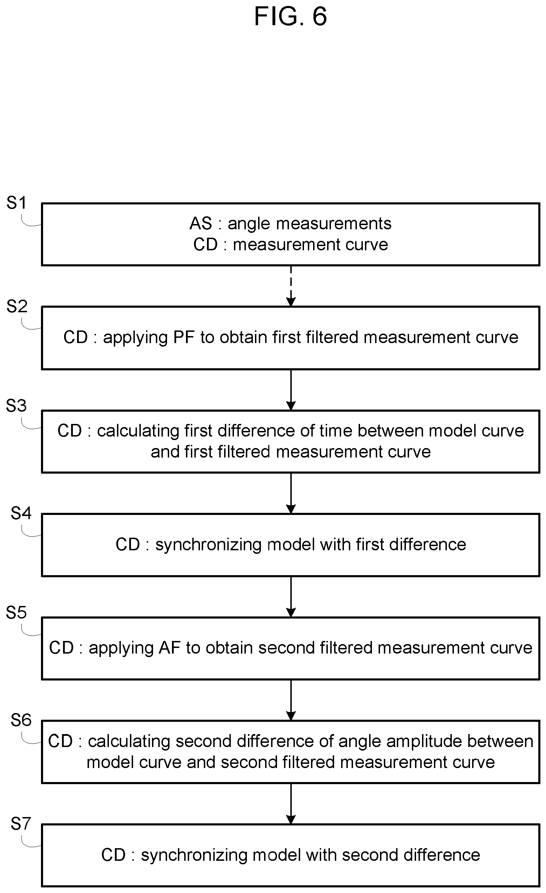

With reference to FIG. 6, a method for optimizing a model used by an antisway function for the transport of a load by a hoisting appliance according to one embodiment of the invention comprises steps S1 to S7.

Initially, the control device CD stores a mathematical model and implements an anti-sway algorithm that uses in real time the mathematical model to follow the theorical sways of the load during transport. The control device CD initiates the transport of the load and is configured to determine remarkable points of the mathematical model for synchronization of the model according to at least one of steps S4 and S7.

In step S1, the angle sensor AS performs measurements of angle of the load with respect to the trolley. The control device CD retrieves measurements from the angle sensor AS to produce a measurement curve representing a primary sway.

The measurement curve presents unwanted information due for example to secondary sway or vibration.

In step S2, the control device CD applies a first filter, called period filter PF, to the measurement curve to obtain a first filtered measurement curve. The period filter PF is set with a delay slightly above the period of the secondary sway.

In step S3, the control device CD calculates a first difference of time between the model curve and the first filtered measurement curve.

In step S4, the control device CD synchronizes the model with the first calculated difference, by applying a time correction corresponding to the first calculated difference.

The control device CD can use remarkable points of the model for synchronization, like a zero angle of the model curve and a zero angle of first filtered measurement curve.

The model can be resynchronized thanks to the first filtered measurement curve just after calculation of the first difference. The time for resynchronization depends on the used remarkable point of the model curve and can be decided by the operator.

In step S5, the control device CD applies a second filter, called amplitude filter AF, to the first measurement curve to obtain a second filtered measurement curve. The amplitude filter is set with a delay less than the period of the secondary sway.

In step S6, the control device CD calculates a second difference of a maximum angle amplitude between the model curve and the second filtered measurement curve.

In step S7, the control device CD synchronizes the model with the second calculated difference, by applying an amplitude correction corresponding to the second calculated difference.

The order of sequences of steps S2-S4 and S5-S7 is interchangeable, representing two possibilities of resynchronization of the model.

An embodiment comprises a control device CD under the form of an apparatus comprising one or more processor(s), I/O interface(s), and a memory coupled to the processor(s). The processor(s) may be implemented as one or more microprocessors, microcomputers, microcontrollers, digital signal processors, central processing units, state machines, logic circuitries, and/or any devices that manipulate signals based on operational instructions. The processor(s) can be a single processing unit or a number of units, all of which could also include multiple computing units. Among other capabilities, the processor(s) are configured to fetch and execute computer-readable instructions stored in the memory.

The functions realized by the processor may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

The memory may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. The memory includes modules and data. The modules include routines, programs, objects, components, data structures, etc., which perform particular tasks or implement particular abstract data types. The data, amongst other things, serves as a repository for storing data processed, received, and generated by one or more of the modules.

A person skilled in the art will readily recognize that steps of the methods, presented above, can be performed by programmed computers. Herein, some embodiments are also intended to cover program storage devices, for example, digital data storage media, which are machine or computer readable and encode machine-executable or computer-executable programs of instructions, where said instructions perform some or all of the steps of the described method. The program storage devices may be, for example, digital memories, magnetic storage media, such as a magnetic disks and magnetic tapes, hard drives, or optically readable digital data storage media.

Although the present invention has been described above with reference to specific embodiments, it is not intended to be limited to the specific form set forth herein. Rather, the invention is limited only by the accompanying claims and, other embodiments than the specific above are equally possible within the scope of these appended claims.

Furthermore, although exemplary embodiments have been described above in some exemplary combination of components and/or functions, it should be appreciated that, alternative embodiments may be provided by different combinations of members and/or functions according to the scope of the claims.

## Claims

1. Method for optimizing a model used in real time by an antisway function for the transport of a load by a hoisting appliance spanning a hoisting area and comprising a gantry and a trolley able to transport the load suspended to a hoist mechanism hosted in the trolley, wherein, when transported, the load presents a primary sway, the model comprising a model curve representing the theorical primary sway of the load over time, the method comprising in a control device (CD):
retrieving (S1) measurements of angles of the load with respect to the trolley to produce a measurement curve representing a primary sway of the load,
**characterized in that**, the method further comprises the following steps,
applying (S2) a first filter to the measurement curve to obtain a first filtered measurement curve,
calculating (S3) a first difference of time between the model curve and the first filtered measurement curve,
synchronizing (S4) the model based on the first calculated difference .

2. A method according to claim 1, wherein the model is synchronized based on the first calculated difference, by applying a time correction corresponding to the first calculated difference.

3. A method according to any of previous claims, wherein the first filter is a low pass filter of first order.

4. A method according to any of previous claims, wherein the first filter is set with a delay slightly above the period of a secondary sway of the load.

5. A method according to any of previous claims, wherein the first filter is a dynamic filter.

6. A method according to any of claims 4 and 5, wherein the first filter is set dynamically with a delay depending on the secondary sway of the load

7. Method for optimizing a model used in real time by an antisway function for the transport of a load by a hoisting appliance spanning a hoisting area and comprising a gantry and a trolley able to transport the load suspended to a hoist mechanism hosted in the trolley, wherein, when transported, the load presents a primary sway, the model comprising a model curve representing the theorical primary sway of the load over time, the method comprising in a control device (CD):
retrieving (S1) measurements of angles of the load with respect to the trolley to produce a measurement curve representing a primary sway of the load,
**characterized in that**, the method further comprises the following steps,
applying (S5) a second filter to the first measurement curve to obtain a second filtered measurement curve,
calculating (S6) a second difference of a maximum angle amplitude between the model curve and the second filtered measurement curve,
synchronizing (S7) the model based on the second calculated difference.

8. A method according to claim 7, wherein the model is synchronized based on the second calculated difference, by applying an amplitude correction corresponding to the second calculated difference.

9. A method according to any of previous claims 7 and 8, wherein the second filter is low pass filter of first order.

10. A method according to any of claims 7 to 9, wherein the second filter is set with a delay less than the period of a secondary sway of the load.

11. A method according to any of previous claims, wherein the second filter is a dynamic filter.

12. A method according to any of claims 10 and 11, wherein the second filter is set dynamically with a delay depending on the secondary sway of the load.

13. An apparatus for optimizing a model used in real time by an antisway function for the transport of a load by a hoisting appliance spanning a hoisting area and comprising a gantry and a trolley able to transport the load suspended to a hoist mechanism hosted in the trolley, wherein, when transported, the load presents a primary sway, the model comprising a model curve representing the theorical primary sway of the load over time, the apparatus comprising:
one or more network interfaces to communicate with a telecommunication network;
a processor coupled to the network interfaces and configured to execute one or more processes; and
a memory configured to store a process executable by the processor, the process when executed operable to:
retrieve measurements of angles of the load with respect to the trolley to produce a measurement curve representing a primary sway of the load,
**characterized in that**, the process further comprises the following steps,
applying a first filter to the measurement curve to obtain a first filtered measurement curve,
calculating a first difference of time between the model curve and the first filtered measurement curve,
synchronizing the model based on the first calculated difference.

14. An apparatus for optimizing a model used in real time by an antisway function for the transport of a load by a hoisting appliance spanning a hoisting area and comprising a gantry and a trolley able to transport the load suspended to a hoist mechanism hosted in the trolley, wherein, when transported, the load presents a primary sway, the model comprising a model curve representing the theorical primary sway of the load over time, the apparatus comprising:
one or more network interfaces to communicate with a telecommunication network;
a processor coupled to the network interfaces and configured to execute one or more processes; and
a memory configured to store a process executable by the processor, the process when executed operable to:
retrieve measurements of angles of the load with respect to the trolley to produce a measurement curve representing a primary sway of the load,
**characterized in that**, the process further comprises the following steps,
applying a second filter to the first measurement curve to obtain a second filtered measurement curve,
calculating a second difference of a maximum angle amplitude between the model curve and the second filtered measurement curve,
synchronizing the model based on the second calculated difference.

15. A computer-readable medium having embodied thereon a computer program for executing a method for optimizing a model used in real time by an antisway function for the transport of a load by a hoisting appliance according to any of claims 1 to 12.

## Patentansprüche

1. Verfahren zum Optimieren eines Modells, das in Echtzeit von einer Pendeldämpfungsfunktion für den Transport einer Last durch eine Hebevorrichtung verwendet wird, die einen Hebebereich überspannt und ein Gerüst und eine Laufkatze umfasst, die in der Lage ist, die an einem in der Laufkatze untergebrachten Hebemechanismus aufgehängte Last zu transportieren, wobei die Last beim Transport ein primäres Pendeln aufweist, wobei das Modell eine Modellkurve umfasst, die das theoretische primäre Pendeln der Last im Zeitverlauf darstellt, wobei das Verfahren in einer Steuervorrichtung (CD) umfasst:
Abrufen (S1) von Messungen von Winkeln der Last in Bezug auf die Laufkatze, um eine Messkurve zu erzeugen, die ein primäres Pendeln der Last darstellt,
**dadurch gekennzeichnet, dass** das Verfahren ferner die folgenden Schritte umfasst:
Anwenden (S2) eines ersten Filters auf die Messkurve, um eine erste gefilterte Messkurve zu erhalten,
Berechnen (S3) einer ersten Zeitdifferenz zwischen der Modellkurve und der ersten gefilterten Messkurve,
Synchronisieren (S4) des Modells auf Grundlage der ersten berechneten Differenz.

2. Verfahren nach Anspruch 1, wobei das Modell auf Grundlage der ersten berechneten Differenz synchronisiert wird, indem eine der ersten berechneten Differenz entsprechende Zeitkorrektur angewendet wird.

3. Verfahren nach einem der vorhergehenden Ansprüche, wobei das erste Filter ein Tiefpassfilter erster Ordnung ist.

4. Verfahren nach einem der vorhergehenden Ansprüche, wobei das erste Filter mit einer Verzögerung eingestellt wird, die geringfügig über der Periode eines sekundären Pendelns der Last liegt.

5. Verfahren nach einem der vorhergehenden Ansprüche, wobei das erste Filter ein dynamisches Filter ist.

6. Verfahren nach einem der Ansprüche 4 und 5, wobei das erste Filter dynamisch mit einer Verzögerung eingestellt wird, die vom sekundären Pendeln der Last abhängt.

7. Verfahren zum Optimieren eines Modells, das in Echtzeit von einer Pendeldämpfungsfunktion für den Transport einer Last durch eine Hebevorrichtung verwendet wird, die einen Hebebereich überspannt und ein Gerüst und eine Laufkatze umfasst, die in der Lage ist, die an einem in der Laufkatze untergebrachten Hebemechanismus aufgehängte Last zu transportieren, wobei die Last beim Transport ein primäres Pendeln aufweist, wobei das Modell eine Modellkurve umfasst, die das theoretische primäre Pendeln der Last im Zeitverlauf darstellt, wobei das Verfahren in einer Steuervorrichtung (CD) umfasst:
Abrufen (S1) von Messungen von Winkeln der Last in Bezug auf die Laufkatze, um eine Messkurve zu erzeugen, die ein primäres Pendeln der Last darstellt,
**dadurch gekennzeichnet, dass** das Verfahren ferner die folgenden Schritte umfasst:
Anwenden (S5) eines zweiten Filters auf die erste Messkurve, um eine zweite gefilterte Messkurve zu erhalten,
Berechnen (S6) einer zweiten Differenz einer maximalen Winkelamplitude zwischen der Modellkurve und der zweiten gefilterten Messkurve,
Synchronisieren (S7) des Modells auf Grundlage der zweiten berechneten Differenz.

8. Verfahren nach Anspruch 7, wobei das Modell auf Grundlage der zweiten berechneten Differenz synchronisiert wird, indem eine der zweiten berechneten Differenz entsprechende Amplitudenkorrektur angewendet wird.

9. Verfahren nach einem der vorhergehenden Ansprüche 7 und 8, wobei das zweite Filter ein Tiefpassfilter erster Ordnung ist.

10. Verfahren nach einem der Ansprüche 7 bis 9, wobei das zweite Filter mit einer Verzögerung eingestellt wird, die geringer als die Periode eines sekundären Pendelns der Last ist.

11. Verfahren nach einem der vorhergehenden Ansprüche, wobei das zweite Filter ein dynamisches Filter ist.

12. Verfahren nach einem der Ansprüche 10 und 11, wobei das zweite Filter dynamisch mit einer Verzögerung eingestellt wird, die vom sekundären Pendeln der Last abhängt.

13. Vorrichtung zum Optimieren eines Modells, das in Echtzeit von einer Pendeldämpfungsfunktion für den Transport einer Last durch eine Hebevorrichtung verwendet wird, die einen Hebebereich überspannt und ein Gerüst und eine Laufkatze umfasst, die in der Lage ist, die an einem in der Laufkatze untergebrachten Hebemechanismus aufgehängte Last zu transportieren, wobei die Last beim Transport ein primäres Pendeln aufweist, wobei das Modell eine Modellkurve umfasst, die das theoretische primäre Pendeln der Last im Zeitverlauf darstellt, wobei die Vorrichtung umfasst:
eine oder mehrere Netzwerkschnittstellen zum Kommunizieren mit einem Telekommunikationsnetzwerk;
einen Prozessor, der mit den Netzwerkschnittstellen gekoppelt ist und konfiguriert ist zum Ausführen eines oder mehrerer Prozesse; und
einen Speicher, der konfiguriert ist zum Speichern eines Prozesses, der durch den Prozessor ausführbar ist, wobei der Prozess bei Ausführung funktionsfähig ist zum:
Abrufen von Messungen von Winkeln der Last in Bezug auf die Laufkatze, um eine Messkurve zu erzeugen, die ein primäres Pendeln der Last darstellt,
**dadurch gekennzeichnet, dass** der Prozess ferner die folgenden Schritte umfasst:
Anwenden eines ersten Filters auf die Messkurve, um eine erste gefilterte Messkurve zu erhalten,
Berechnen einer ersten Zeitdifferenz zwischen der Modellkurve und der ersten gefilterten Messkurve,
Synchronisieren des Modells auf Grundlage der ersten berechneten Differenz.

14. Vorrichtung zum Optimieren eines Modells, das in Echtzeit von einer Pendeldämpfungsfunktion für den Transport einer Last durch eine Hebevorrichtung verwendet wird, die einen Hebebereich überspannt und ein Gerüst und eine Laufkatze umfasst, die in der Lage ist, die an einem in der Laufkatze untergebrachten Hebemechanismus aufgehängte Last zu transportieren, wobei die Last beim Transport ein primäres Pendeln aufweist, wobei das Modell eine Modellkurve umfasst, die das theoretische primäre Pendeln der Last im Zeitverlauf darstellt, wobei die Vorrichtung umfasst:
eine oder mehrere Netzwerkschnittstellen zum Kommunizieren mit einem Telekommunikationsnetzwerk;
einen Prozessor, der mit den Netzwerkschnittstellen gekoppelt ist und konfiguriert ist zum Ausführen eines oder mehrerer Prozesse; und
einen Speicher, der konfiguriert ist zum Speichern eines Prozesses, der durch den Prozessor ausführbar ist, wobei der Prozess bei Ausführung funktionsfähig ist zum:
Abrufen von Messungen von Winkeln der Last in Bezug auf die Laufkatze, um eine Messkurve zu erzeugen, die ein primäres Pendeln der Last darstellt,
**dadurch gekennzeichnet, dass** der Prozess ferner die folgenden Schritte umfasst:
Anwenden eines zweiten Filters auf die erste Messkurve, um eine zweite gefilterte Messkurve zu erhalten,
Berechnen einer zweiten Differenz einer maximalen Winkelamplitude zwischen der Modellkurve und der zweiten gefilterten Messkurve,
Synchronisieren des Modells auf Grundlage der zweiten berechneten Differenz.

15. Computerlesbares Medium, das ein darin konkretisiertes Computerprogramm zum Ausführen eines Verfahrens zum Optimieren eines Modells, das in Echtzeit von einer Pendeldämpfungsfunktion für den Transport einer Last durch eine Hebevorrichtung verwendet wird, nach einem der Ansprüche 1 bis 12 aufweist.

## Revendications

1. Procédé d'optimisation d'un modèle utilisé en temps réel par une fonction anti-balancement pour le transport d'une charge par un engin de levage couvrant une aire de levage et comprenant un portique et un chariot apte à transporter la charge suspendue à un mécanisme de levage logé dans le chariot, dans lequel, lors du transport, la charge présente un balancement primaire, le modèle comprenant une courbe modèle représentant le balancement primaire théorique de la charge dans le temps, le procédé comprenant, dans un dispositif de commande (CD) :
la récupération (S1) des mesures des angles de la charge par rapport au chariot pour produire une courbe de mesure représentant un balancement primaire de la charge,
**caractérisé en ce que** le procédé comprend en outre les étapes suivantes,
l'application (S2) d'un premier filtre à la courbe de mesure pour obtenir une première courbe de mesure filtrée,
le calcul (S3) d'une première différence de temps entre la courbe modèle et la première courbe de mesure filtrée,
la synchronisation (S4) du modèle sur la base de la première différence calculée.

2. Procédé selon la revendication 1, dans lequel le modèle est synchronisé sur la base de la première différence calculée, en appliquant une correction temporelle correspondant à la première différence calculée.

3. Procédé selon l'une quelconque des revendications précédentes, dans lequel le premier filtre est un filtre passe-bas de premier ordre.

4. Procédé selon l'une quelconque des revendications précédentes, dans lequel le premier filtre est réglé avec un retard légèrement supérieur à la période d'un balancement secondaire de la charge.

5. Procédé selon l'une quelconque des revendications précédentes, dans lequel le premier filtre est un filtre dynamique.

6. Procédé selon l'une quelconque des revendications 4 et 5, dans lequel le premier filtre est réglé dynamiquement avec un retard dépendant du balancement secondaire de la charge.

7. Procédé d'optimisation d'un modèle utilisé en temps réel par une fonction anti-balancement pour le transport d'une charge par un engin de levage couvrant une aire de levage et comprenant un portique et un chariot apte à transporter la charge suspendue à un mécanisme de levage logé dans le chariot, dans lequel, lors du transport, la charge présente un balancement primaire, le modèle comprenant une courbe modèle représentant le balancement primaire théorique de la charge dans le temps, le procédé comprenant, dans un dispositif de commande (CD) :
la récupération (S1) des mesures des angles de la charge par rapport au chariot pour produire une courbe de mesure représentant un balancement primaire de la charge,
**caractérisé en ce que** le procédé comprend en outre les étapes suivantes,
l'application (S5) d'un second filtre à la première courbe de mesure pour obtenir une seconde courbe de mesure filtrée,
le calcul (S6) d'une seconde différence d'une amplitude angulaire maximale entre la courbe modèle et la seconde courbe de mesure filtrée,
la synchronisation (S7) du modèle sur la base de la seconde différence calculée.

8. Procédé selon la revendication 7, dans lequel le modèle est synchronisé sur la base de la seconde différence calculée, en appliquant une correction d'amplitude correspondant à la seconde différence calculée.

9. Procédé selon l'une quelconque des revendications précédentes 7 et 8, dans lequel le second filtre est un filtre passe-bas de premier ordre.

10. Procédé selon l'une quelconque des revendications 7 à 9, dans lequel le second filtre est réglé avec un retard inférieur à la période d'un balancement secondaire de la charge.

11. Procédé selon l'une quelconque des revendications précédentes, dans lequel le second filtre est un filtre dynamique.

12. Procédé selon l'une quelconque des revendications 10 et 11, dans lequel le second filtre est réglé dynamiquement avec un retard dépendant du balancement secondaire de la charge.

13. Appareil d'optimisation d'un modèle utilisé en temps réel par une fonction anti-balancement pour le transport d'une charge par un engin de levage couvrant une aire de levage et comprenant un portique et un chariot apte à transporter la charge suspendue à un mécanisme de levage logé dans le chariot, dans lequel, lors du transport, la charge présente un balancement primaire, le modèle comprenant une courbe modèle représentant le balancement primaire théorique de la charge dans le temps, l'appareil comprenant :
une ou plusieurs interfaces réseau pour communiquer avec un réseau de télécommunication ;
un processeur couplé aux interfaces réseau et configuré pour exécuter un ou plusieurs processus ; et
une mémoire configurée pour stocker un processus exécutable par le processeur, le processus, lorsqu'il est exécuté, pouvant fonctionner pour :
récupérer les mesures des angles de la charge par rapport au chariot pour produire une courbe de mesure représentant un balancement primaire de la charge,
**caractérisé en ce que** le processus comprend en outre les étapes suivantes,
appliquer un premier filtre à la courbe de mesure pour obtenir une première courbe de mesure filtrée,
calculer une première différence de temps entre la courbe modèle et la première courbe de mesure filtrée,
synchroniser le modèle sur la base de la première différence calculée.

14. Appareil d'optimisation d'un modèle utilisé en temps réel par une fonction anti-balancement pour le transport d'une charge par un engin de levage couvrant une aire de levage et comprenant un portique et un chariot apte à transporter la charge suspendue à un mécanisme de levage logé dans le chariot, dans lequel, lors du transport, la charge présente un balancement primaire, le modèle comprenant une courbe modèle représentant le balancement primaire théorique de la charge dans le temps, l'appareil comprenant :
une ou plusieurs interfaces réseau pour communiquer avec un réseau de télécommunication ;
un processeur couplé aux interfaces réseau et configuré pour exécuter un ou plusieurs processus ; et
une mémoire configurée pour stocker un processus exécutable par le processeur, le processus, lorsqu'il est exécuté, pouvant fonctionner pour :
récupérer les mesures des angles de la charge par rapport au chariot pour produire une courbe de mesure représentant un balancement primaire de la charge,
**caractérisé en ce que** le processus comprend en outre les étapes suivantes,
appliquer un second filtre à la première courbe de mesure pour obtenir une seconde courbe de mesure filtrée,
calculer une seconde différence d'amplitude angulaire maximale entre la courbe modèle et la seconde courbe de mesure filtrée,
synchroniser le modèle sur la base de la seconde différence calculée.

15. Support lisible par ordinateur sur lequel est incorporé un programme informatique pour exécuter un procédé d'optimisation d'un modèle utilisé en temps réel par une fonction anti-balancement pour le transport d'une charge par un appareil de levage selon l'une quelconque des revendications 1 à 12.
